# EUROPEAN PATENT SPECIFICATION

(11) **EP 3 272 196 B1**
(45) Date of publication and mention of the grant of the patent: **03.07.2019**
(21) Application number: 17181253.0
(22) Date of filing: 13.07.2017
(51) Int. Cl.: A01B 73/06, A01B 63/16, A01B 63/22

(54) **AN AGRICULTURAL IMPLEMENT**
LANDWIRTSCHAFTLICHES ANBAUGERÄT
OUTIL AGRICOLE

(30) Priority: 18.07.2016 GB 201612418
(43) Date of publication of application: 24.01.2018
(73) Proprietor: Brock, Arthur Philip Harvey, Thaxted, Essex CM6 2RH (GB)
(72) Inventor: Brock, Arthur Philip Harvey, Thaxted, Essex CM6 2RH (GB)
(74) Representative: Dolleymores

(56) References cited:
- EP-A1- 3 146 826
- WO-A1-2011/074945
- AU-A- 1 678 076
- FR-A1- 2 060 155
- US-B1- 8 418 777

## Description

The present invention relates to agricultural implements and particularly, but not exclusively, to subsoilers.

Certain agricultural implements, that are arranged to work the soil by being pulled (towed or carried on a multi-point linkage) behind a tractor, have significant forces applied to them. This is particularly the case with subsoilers, the tines of which may often penetrate deep into the ground, into the relatively compact soil below the level of the plough pan.

The requirement that such implements have to be capable of withstanding and transferring large forces, normally results in such implements comprising a heavy rigid frame with a number of tools, such as tines, mounted thereon. The requirement for a rigid frame often means that the implement has to be restricted in width, to enable it to be transported on ordinary roads or through gateways. In addition, tines are normally individually bolted in set positions to such a frame by respective mountings. This means that it is not easy to adjust the spacing between the tines in response to changes in soil conditions or a change of application.

Examples of frames which are arranged to be folded can however be found in the following patent documents: WO 2011/07495 A1; AU 1678076 A; FR 2060155 A1; EP 3146826 A1 and US 8418777 B1.

It is an object of the present invention to provide an improved agricultural implement having foldable frame.

According to the present invention there is provided an agricultural implement comprising: a drawbar having a towing point or linkage at a front end; a frame having left and right hand wings foldable between an extended working configuration, where the wings extend outwardly to respective sides of the drawbar, and a retracted transport configuration, where the wings are folded in towards a longitudinal axis of the implement, a proximal end of each wing being pivotally connected to the drawbar at or towards a rear end of the drawbar, so that together with the drawbar the wings define a frame of the implement; a plurality of spaced apart tools attached along each wing; and a bracing arrangement for maintaining the wings in the working configuration, the bracing arrangement comprising: a left hand bracing member pivotally connected at a distal end to the left hand wing at a point remote from the proximal end of the left hand wing; and a right hand bracing member pivotally connected at a distal end to the right hand wing at a point remote from the proximal end of the right hand wing, wherein the left and right hand bracing members are directly or indirectly, pivotally connected together at their proximal ends and are arranged in the working configuration to be held at a predetermined angle relative to each other in order to retain the wings in the working configuration, characterised in that the proximal end of each wing is pivotally connected to the drawbar at a fixed location and in further comprising a drawbar extension member connected at a front end to the drawbar at or towards the rear of the drawbar and connected at a rear end to the proximal ends of the bracing members, the extension member being arranged to move between a retracted position, where the proximal ends of the bracing members are in a forward position retaining the wings in the transport configuration and an extended position where the proximal ends of the bracing member are in a rearward position and the bracing members act in compression to retain the wings in the outwardly extending working configuration.

The present invention provides an implement, such as a subsoiler, with a frame (the two wings and drawbar) that can be folded for transportation, but which is particularly strong when in an extended working configuration, because of the bracing members which brace the wings apart. The use of bracing members avoids the need for a rigid frame and an advantage of the present invention is that the traditional single piece rigid frame is replaced by a frame comprising a drawbar and two wings pivotally mounted thereto. The wings being pivotally connected to the frame permits them to flex relative to each other, avoiding the stresses that would otherwise be experienced by a one piece frame. This may enable the inherent strength of the frame to be reduced and makes it less likely that the frame will fail due to fatigue.

The extension member, which may be a hydraulic ram, may be arranged to open and close the wings and to retain the bracing members in their working configuration positions. The agricultural implement may further comprise a stop member arranged to restrict the maximum extension of the hydraulic ram and the hydraulic ram may be housed within the drawbar. The stop member may be connected to a towing point on the implement to permit a further implement to be towed. It may also keep the bracing members centrally positioned or correctly aligned.

In an alternative embodiment the bracing arrangement may comprise one or more actuators acting between each of the bracing members and arranged to hold the bracing members in a working configuration, where the bracing members are aligned perpendicular to a longitudinal axis of the implement. In this embodiment the bracing members are preferably extendable so that when the bracing members are aligned perpendicular to the longitudinal axis of the implement, the bracing members may be extended to one of several positions which determines the position of the wings so that the wings can be set to one of a number of working configurations. This permits the angle between the wings to be varied and thus provides a way of varying the spacing between the tools in the width direction of the implement.

Preferably the agricultural implement further comprising a central mounting to which the proximal ends of the bracing members are pivotally connected, wherein the one or more actuators act between the bracing members via the central mounting.

The central mounting preferably has a fixed orientation to the drawbar and is arranged to move backwards and forwards relative to the drawbar. This may be arranged to ensure the bracing members are correctly positioned.

Preferably the one or more actuators act between a bracing member and the central mounting and more preferably the agricultural implement comprises an actuator associated with each bracing member acting between that bracing member and the central mounting, wherein the actuators are arranged to fold the bracing members together from a working configuration to a transport configuration.

In this embodiment, the wings may be arranged to be set in more than one working configuration wherein, in each working configuration, the wings extend outwards and rearwards to form a rearward facing V-shape, but where the angle of the "V" between the wings and the spacing between the tools in the width direction of the implement is different in each working configuration. This may enable the spacing of the tools to be changed in the width direction of the implement simply by controlling the angle between the wings. This is particularly advantageous where the tools are arranged to freely rotate on their respective wings, so that they are free to align themselves with the direction of travel of the implement. Alternatively, the implement may be provided with a mechanical linkage connected to the tools to maintain them in a forward facing working direction, irrespective of the angle between the wings when they are in a working configuration.

Preferably each wing has a wheel attached thereto at a point remote from its proximal end, the wheels being arranged, to control the depth of the tools mounted on the wings when in the working configuration and to carry the weight of the implement when in the transport configuration. The provision of the wheels enables the implement to be towed, permitting the implement to be larger than it may otherwise be, if it were to be carried by a multipoint linkage. It also permits the wings to be folded into a transport configuration so that they may lie substantially in a longitudinal direction of the implement, where the wheels will then support at least some of the weight of the implement, which in this configuration may extend a significant distance behind the tractor that is towing it.

Preferably the implement further comprising one or more linkages arranged to retain the wheels in a forward facing orientation as the wings are folded between the working and transport configurations. This may ensure that the wheels are always correctly aligned with the direction of travel of the implement.

Preferably the wings are arranged to lie adjacent to and generally parallel with the drawbar when in the transport configuration, minimising the width of the implement when in the transport configuration, making it more manoeuvrable and also more stable for a given track width of the wheels.

The invention is particularly applicable to a subsoiler, where the tools comprise a plurality of tines spaced apart along each wing.

The wings may have a single working configuration in which the drawbar extension member is fully extended and the wings extend backwards and outwards to form a rearward facing V-shape, wherein the plurality of tools are fixed in position on the wings and are correctly aligned with the direction of travel when the wings are in the working configuration.

Advantageously, the wheels extend in a width direction of the implement beyond the wings, when the wings are in the transport configuration. This makes the implement relatively stable when in the transport configuration.

Preferably the bracing members are aligned perpendicular to a longitudinal axis of the implement when in the working configuration, as this enables them to be arranged such that they are only subject to axial compressive forces.

Two embodiments of the present invention will now be described, by way of example only, with reference to the accompany drawings of which:
Figure 1 is a perspective front view of a first embodiment of an agricultural implement in accordance with the present invention, shown in an open working configuration;
Figure 2 is a rear perspective view of the implement as shown in Figure 1;
Figure 3 is a plan view of the implement as shown in Figures 1 and 2;
Figure 4 is a front elevation of the implement as shown in Figures 1 to 3;
Figure 5 is a rear elevation of the implement as shown in Figures 1 to 4;
Figure 6 is a side elevation of the implement as shown in Figures 1 to 5;
Figure 7 is a front perspective view corresponding to Figure 1, but with the implement in a partly folded configuration;
Figure 8 is a plan view of the implement as shown in Figure 7;
Figure 9 is a plan view corresponding to Figures 1 and 7, but with the implement in a folded configuration;
Figure 10 is a front perspective view of the implement as shown in Figure 9;
Figure 11 is a side elevation of the implement as shown in Figures 9 and 10;
Figure 12 is a front perspective view of a second embodiment of an implement in accordance with the present invention, shown in an open working configuration;
Figure 13 is a rear perspective view of the implement as shown in Figure 12;
Figure 14 is a plan view of the implement as shown in Figures 12 and 13;
Figure 15 is a front elevation of the implement as shown in Figures 12 to 14;
Figure 16 is a rear elevation of the implement as shown in Figures 12 to 15;
Figure 17 is a side elevation of the implement as shown in Figures 12 to 16;
Figures 18 and 19 correspond respectively to Figures 12 and 14, but show the implement in a second working configuration; and
Figures 20, 21 and 22 correspond respectively to Figures 12, 14 and 17 but show the implement in a closed transport configuration.

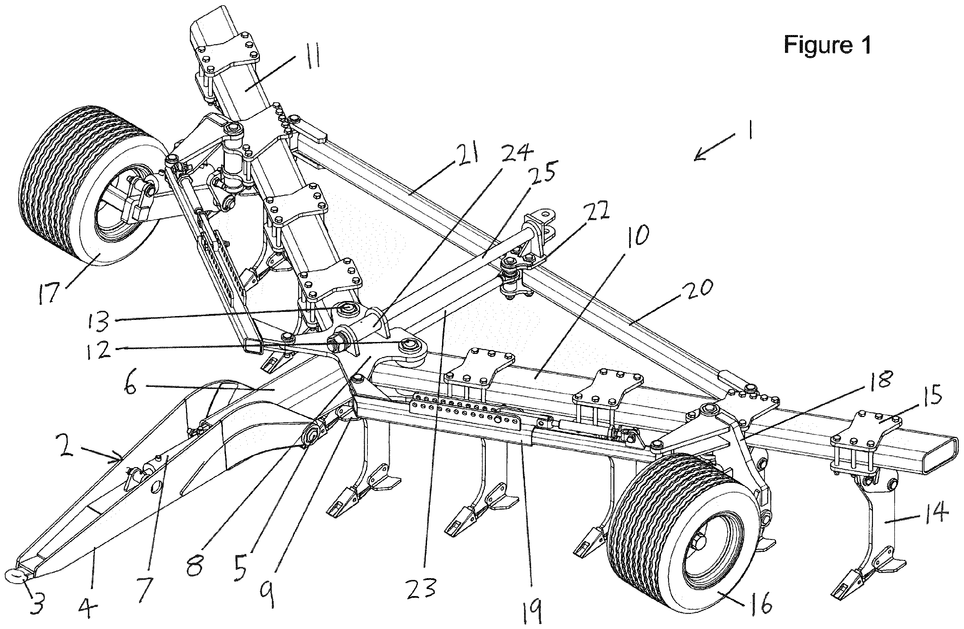

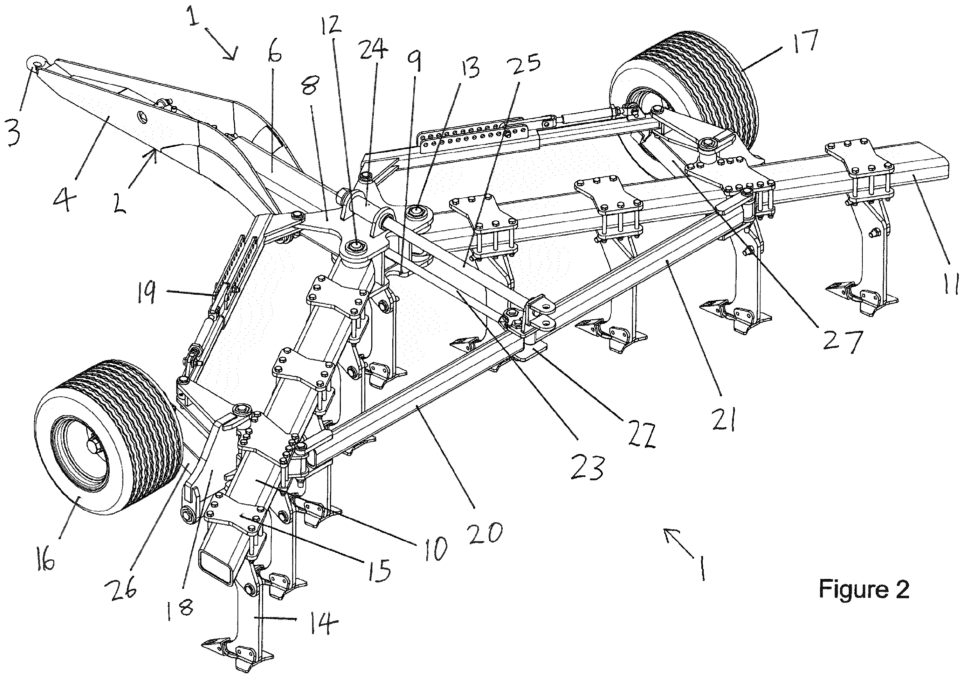

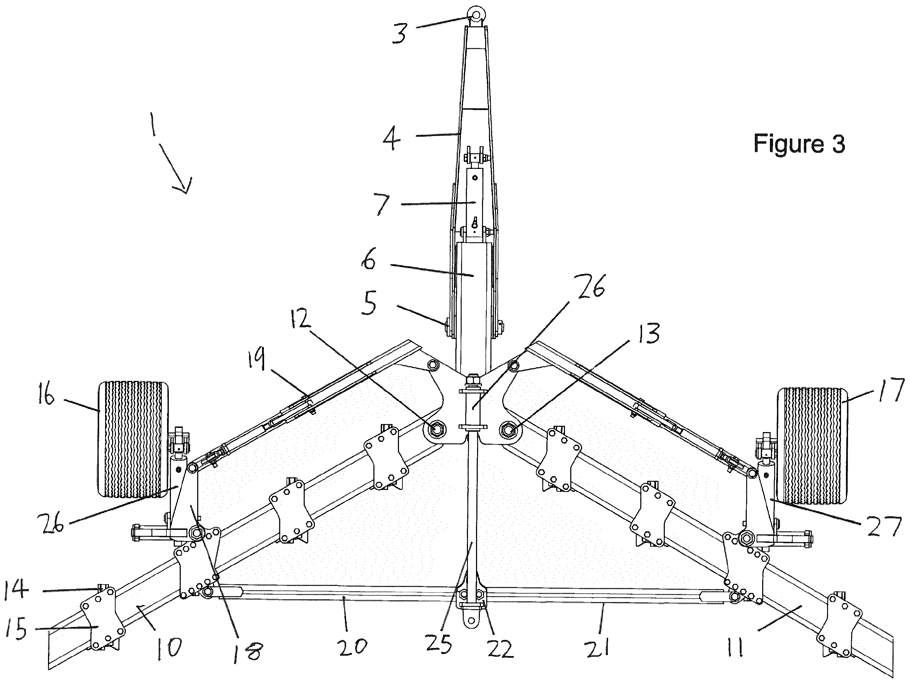

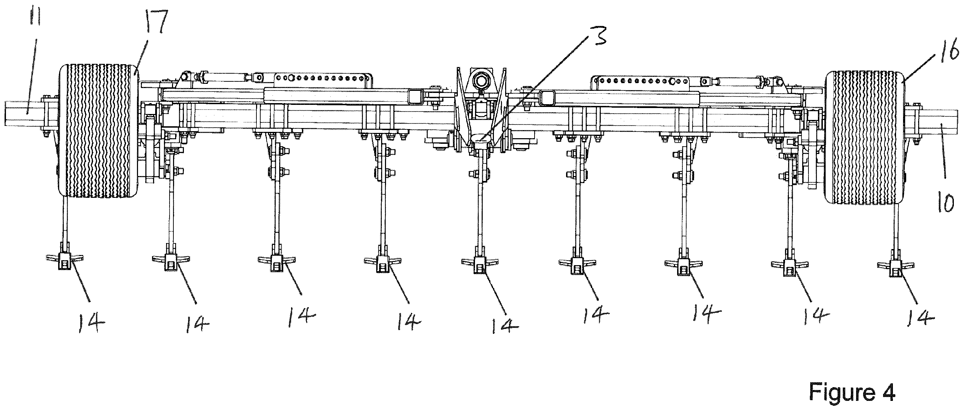

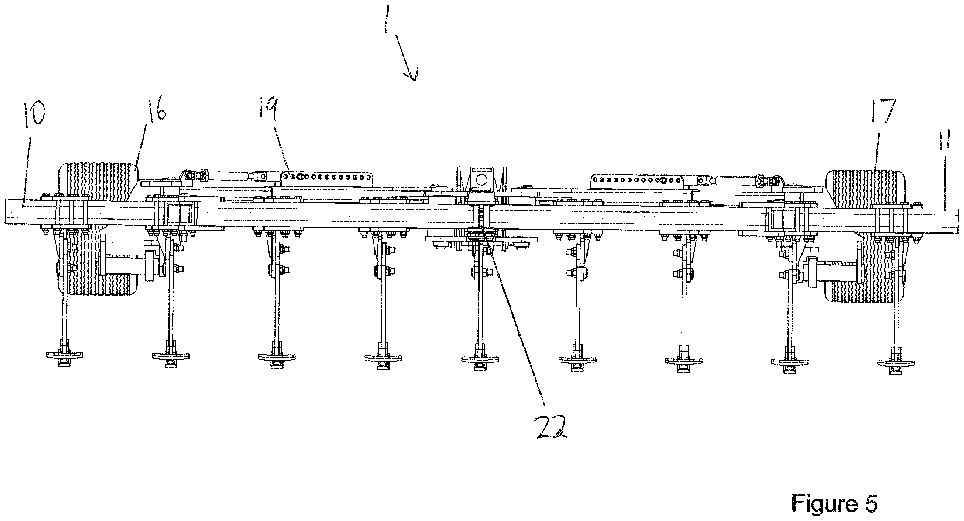

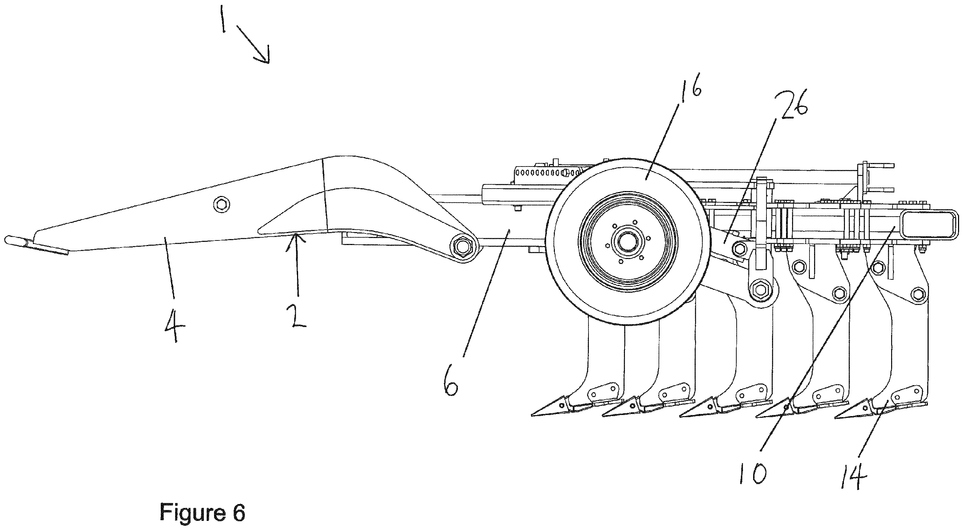

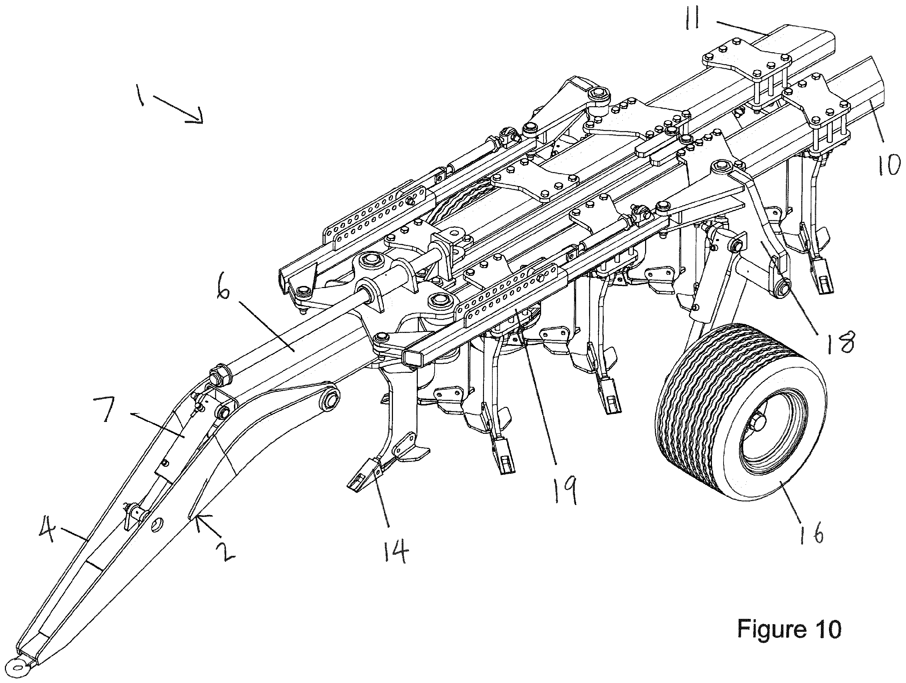

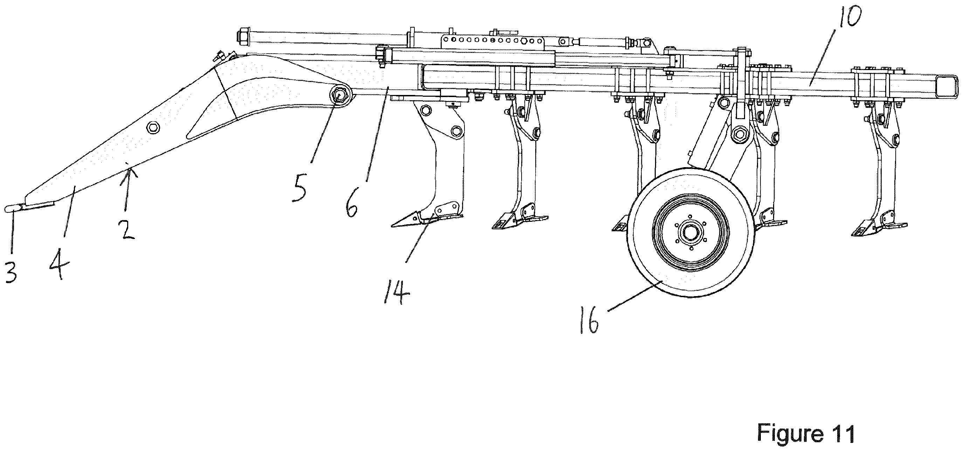

Referring now Figures 1 to 11, these show a first embodiment of an agricultural implement configured as a subsoiler and indicated generally as 1. With specific reference to Figures 1 to 6, these show the subsoiler 1 in an open working configuration. The subsoiler 1, comprises a drawbar 2 having a towing hitch 3 at a front end thereof. The drawbar comprises a front portion 4 pivotally connected by pin 5 to a rear portion 6, whereby vertical alignment of the front portion 4 and rear portion 6 is controlled by a hydraulic ram 7. To the rear of the rear portion 6 of the drawbar 2 are welded two mounting plates 8 and 9, as can mostly be seen from Figure 2. A left hand wing 10 and a right hand wing 11 are mounted by respective pins 12 and 13 to the mounting plates 8 and 9 and thus to the drawbar 2. In the working configuration, shown in Figures 1 to 6, the wings are at an angle of 60° to the drawbar. Each of the wings 10 and 11 comprises a plurality of tines 14, each of which is connected to a respective wing 10, 11 by a respective tine mounting 15, which hold the tines at 60° to the respective wing 10, 11, such that in the working configuration shown in Figures 1 to 6 the tines 14 are aligned with the drawbar 2 and the direction of travel.

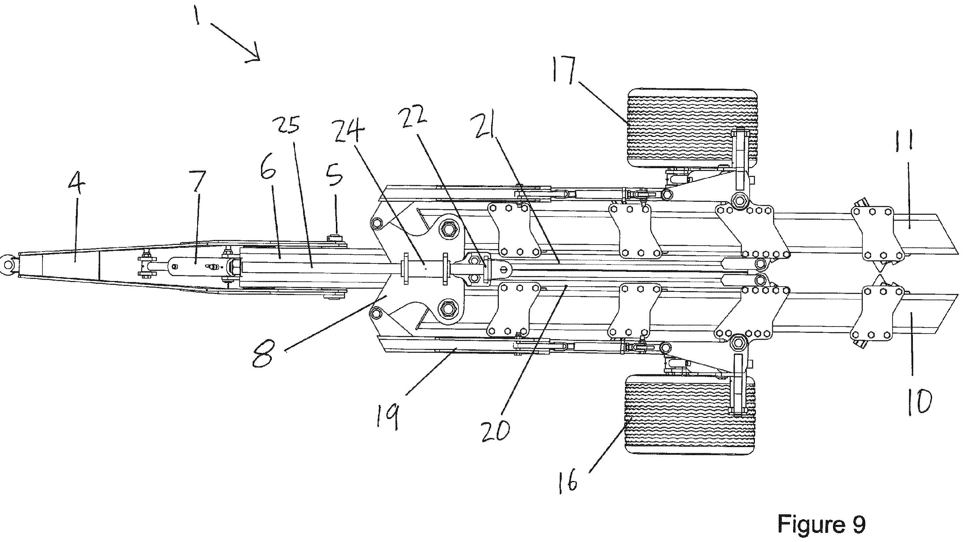

Each of the wings 10 and 11 has, towards a distal end thereof, a respective wheel 16, 17. With reference to the left hand wing 10 and the wheel 16 mounted thereon, the wheel 16 is pivotally connected to the left hand wing 10 by wheel mounting plate 18 and may be raised and lowered by a hydraulic ram 26 (seen in Figure 2). In the working configuration of Figures 1 to 6 the ram raises and lowers the wheel 16 to control the depth of the tines 14, or may lower the wheel to raise the tines 14 clear of the ground to place the subsoiler 1 in a transport configuration, as shown in Figures 9 to 11.

As described later, the wings 10 and 11 may be folded from the working configuration, shown in Figures 1 to 6, to the transport configuration, shown in Figures 9 to 11. A wheel linkage mechanism 19 is pivotally attached at a proximal end to the mounting plates 8 and 9 and at distal end to the wheel mounting 18. The wheel linkage mechanism 19 maintains the wheel 16 in alignment with the drawbar 2, regardless of the configuration of the subsoiler and the angle between the wing 10 and the drawbar 2.

The left hand wing 10 and right hand wing 11 are held in the working configuration, illustrated in Figures 1 to 6, by bracing members 20 and 21. These are pivotally connected at their distal ends to respective wings 10 and 11 and at their proximal ends to a connecting member 22. The position of the connecting member 22 and thus of the bracing members 20, 21 is controlled by a hydraulic ram 23, the cylinder of which is housed within the rear portion 6 of drawbar 2. Additionally, there is provided a bracket 24 on the mounting plate 8 through which rod 25 passes. The rod 25 may restrict the maximum extension of the hydraulic ram 23 and thus, when the hydraulic ram 23 is set to fully extend, the rod 25 determines the maximum extension of the hydraulic ram and thus the position of the bracing members 20, 21. The length of the rod 25 is such that in the working configuration of Figures 1 to 6, the bracing members 20 and 21 are aligned with each other as shown and thus act to retain respective wings 10 and 11 in the position shown in Figures 1 to 6. The rod 25 permits the implement 1 to tow a further implement without placing excessive forces on the hydraulic ram 23, should this be desired. The rod also keeps the connecting member 22 correctly aligned and thus the proximal ends of the bracing members 20 and 21 correctly aligned.

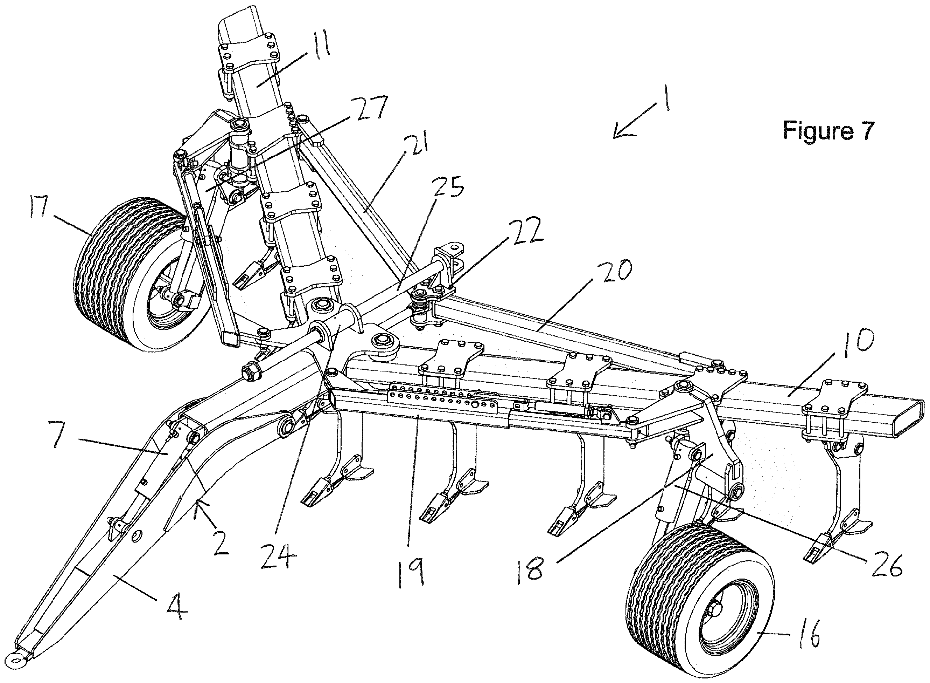

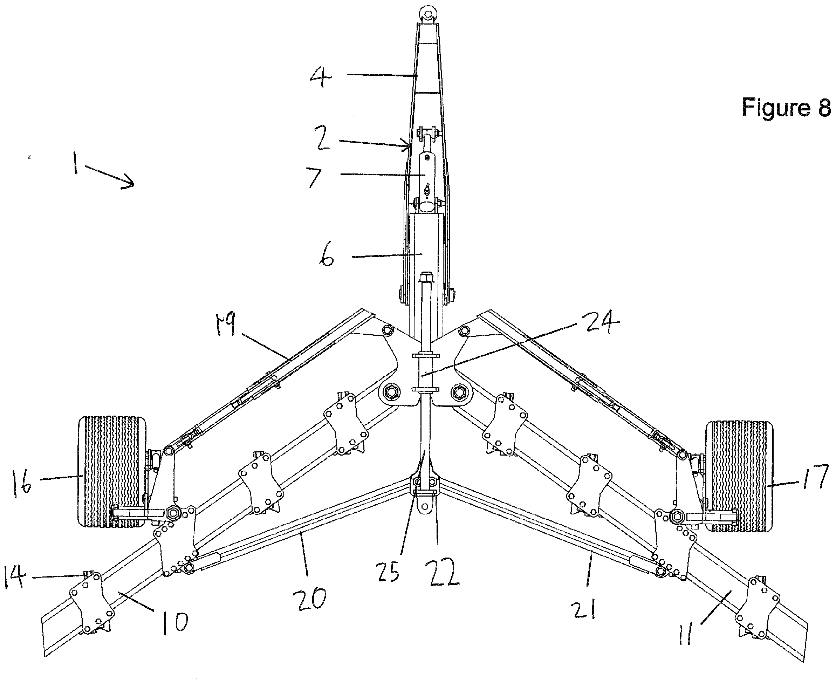

When it is desired to transport the subsoiler 1, the subsoiler 1 is folded from the working configuration of Figures 1 to 6, through an intermediate configuration, illustrated in Figures 7 and 8, to a folded transport configuration, illustrated in Figures 9 to 11. This is achieved by first operating hydraulic rams 26, 27 in order to lower the wheels 16, 17 from the position illustrated in Figures 1 to 6, to the position illustrated in Figures 7 to 11 where they raise the tines 14 clear of the ground. Hydraulic ram 23 is then retracted and draws the proximal ends of the bracing members 20, 21 forward, as shown in Figure 8, which acts to fold the wings 10 and 11 inwardly, until they adopt the folded transport configuration of Figures 9 to 11.

The above procedure is reversed in order to open the subsoiler 1 from the transport configuration illustrated in Figures 9 to 11, to the working configuration illustrated in Figures 1 to 6.

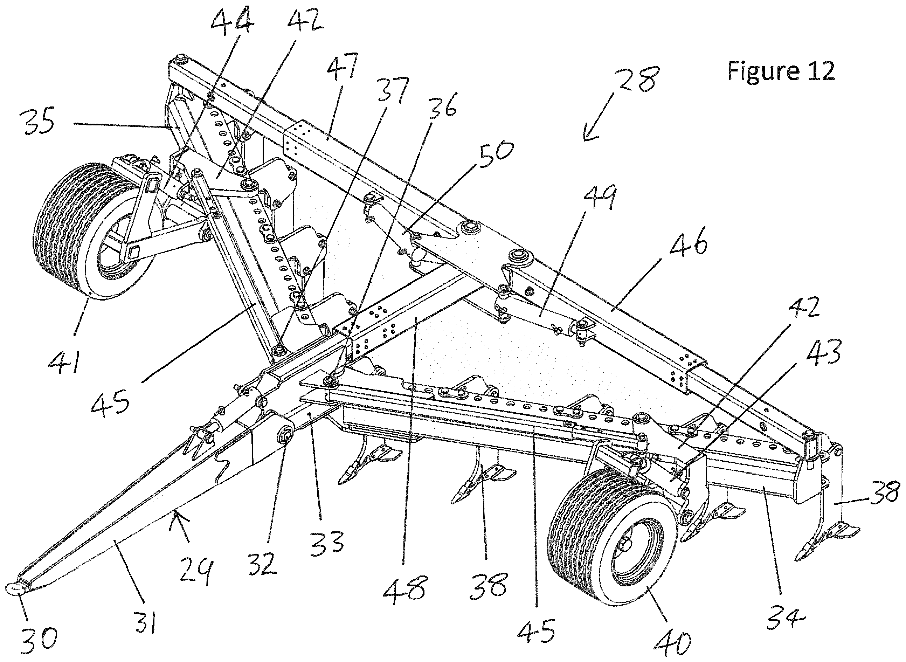

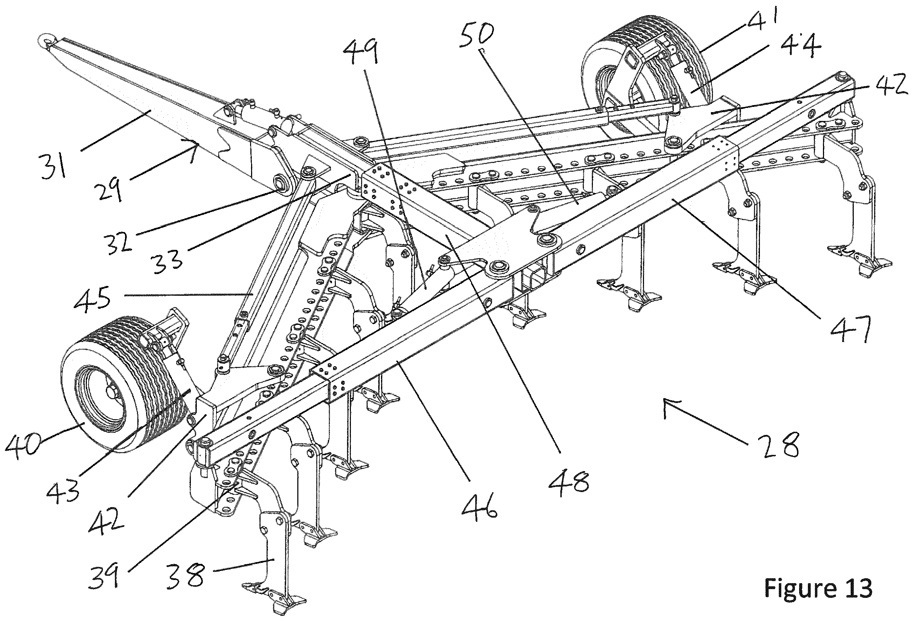

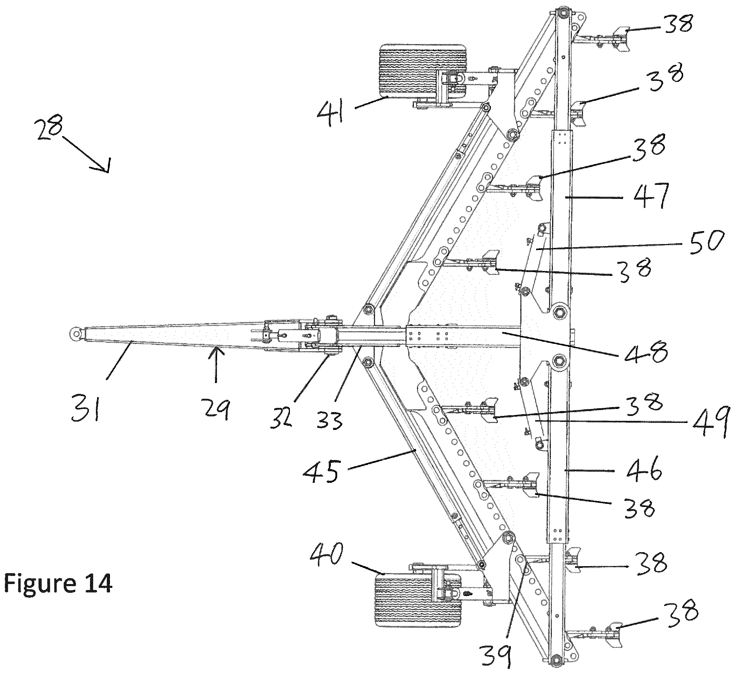

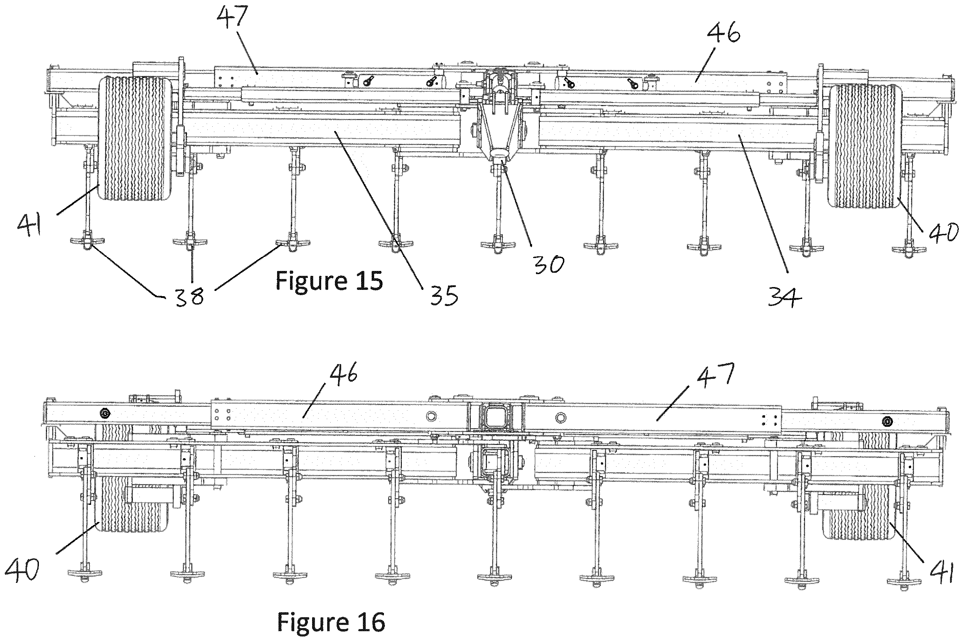

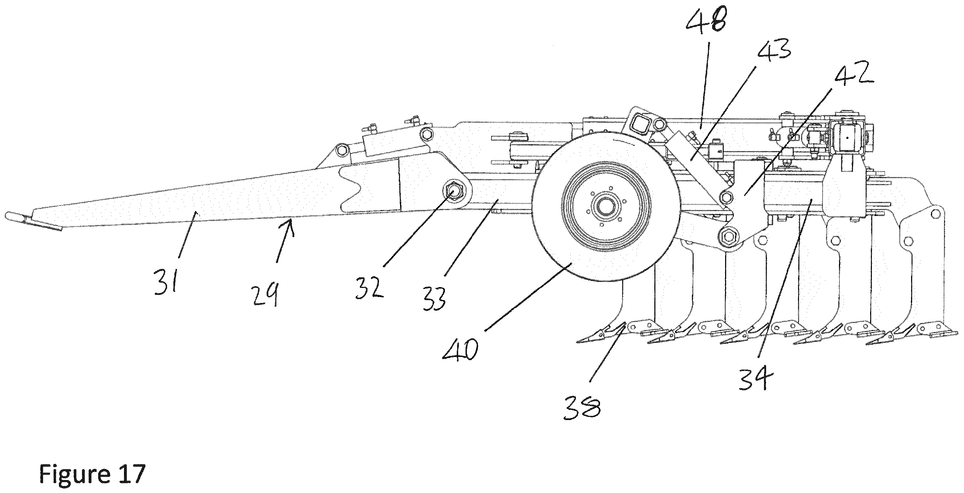

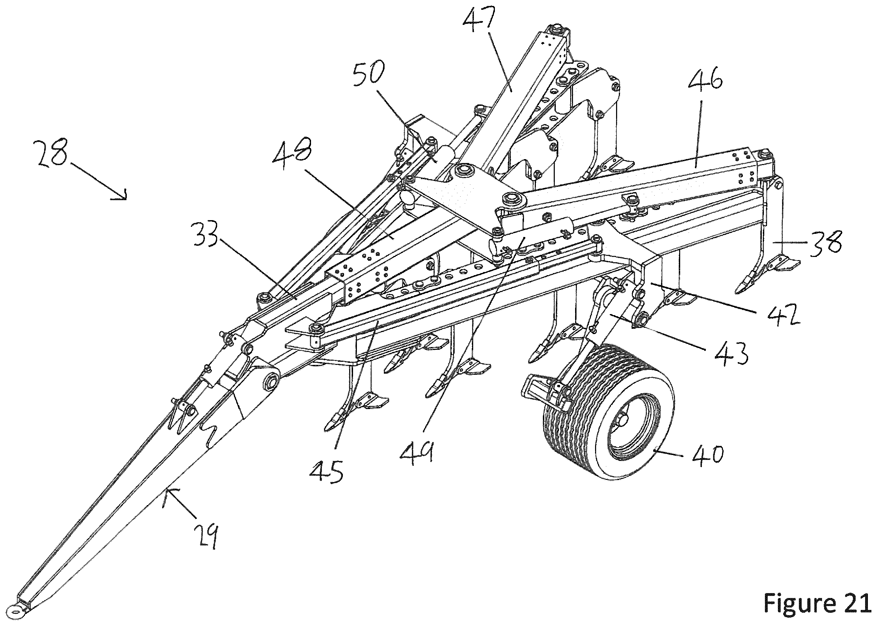

A second embodiment of a subsoiler in accordance with the present invention will now be described with reference to Figures 12 to 21.

With specific reference first to Figures 12 to 17, these show a subsoiler, indicated generally as 28, in an open working configuration. The subsoiler 28 comprises a drawbar 29 having a towing hitch 30 at a front end thereof. The drawbar 28 comprises a front portion 31 pivotally connected by pin 32 to a rear portion 33. To the rear of the rear portion 33 of the drawbar 29 are mounted, by respective pins 36 and 37, a left hand wing 34 and a right hand wing 35. Each of the wings 34 and 35 comprises a plurality of tines 38, each of which is connected to a respective wing 34 or 35 by a respective tine mounting 39. The tine mountings 39 each permits an associated tine 38 to freely rotate, such that in use the tines 38 may align themselves with the direction of travel of the subsoiler 28.
Alternatively a parallel linkage mechanism (not shown) may be provided between the tine mounting 39 and the drawbar 28, to maintain the tines 38 aligned with the direction of travel of the implement 1, irrespective of the angle between the wings 34, 35 and the drawbar 28.

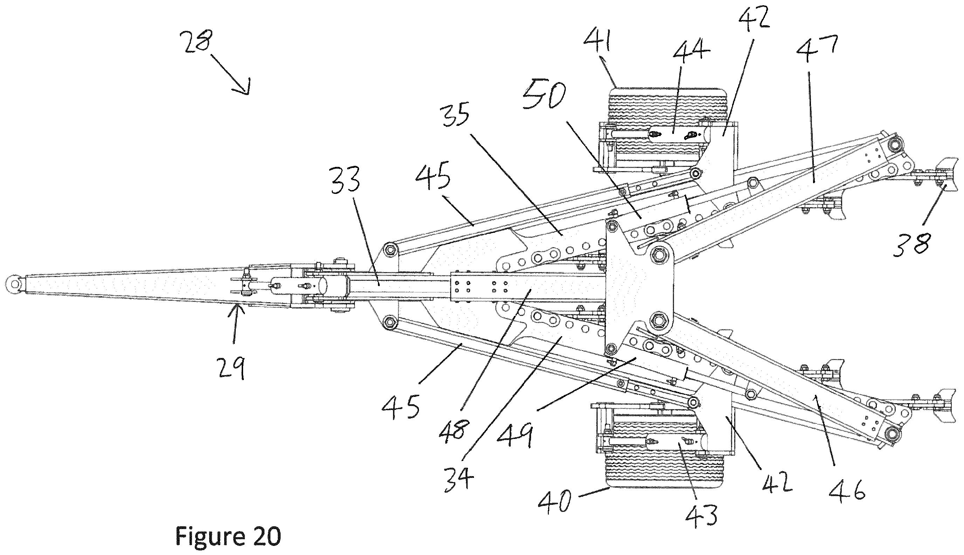

Each of the wings 34 and 35 has, towards a distal end thereof, a respective wheel 40 and 41. With reference to the left hand wing 34 and the wheel 40 mounted thereon, the wheel 40 is pivotally connected to the left hand wing 34 by wheel mounting 42 and may be raised and lowered by a hydraulic ram 43. In the working configuration of Figures 12 to 17 the hydraulic ram 43 raises and lowers the wheel 40 to control the depth of the tines 38, or it may lower the wheel 40 to raise the tines 38 clear of the ground to place the implement in a transport configuration, as shown in Figures 20 to 22.

As described later, the wings 34 and 35 may be folded from the working configuration, shown in Figures 12 to 17, to the transport configuration shown in Figures 20 to 22. A wheel linkage mechanism 45 is pivotally attached at a proximal end to the rear portion33 of the drawbar 29 and at distal end to the wheel mounting 42. The wheel linkage mechanism 45 maintains the wheel 40 in alignment with the drawbar 2, regardless of the configuration of the subsoiler 28 and the angle between the wing 34 and the drawbar 29.

The left hand wing 34 and right hand wing 35 are held in the working configuration illustrated in Figures 1 to 6 by bracing members 46 and 47. These are pivotally connected at their distal ends to respective wings 34 and 35 and at their proximal ends to a drawbar extension member 48, which is free to slide backwards and forwards on the rear portion 33 of the drawbar 28. The drawbar extension member 48 acts to align the proximal ends of the bracing members 46 and 47 and keep them equally spaced to respective sides of a longitudinal centre line of the subsoiler 28.

In this embodiment each of the bracing members 46 and 47 is telescopic and the bracing members 46 and 47 are each extended or retracted by a respective hydraulic ram housed therein, which cannot be seen in the figures.

Hydraulic rams 49 and 50 are pivotally connected to respective bracing members 46 and 47 and act between the respective bracing members and the drawbar extension member 48. In their fully retracted position the hydraulic rams 49 and 50 align the extension members 46 and 47, such they are perpendicular to the drawbar 29 and adopt a working configuration, as illustrated in Figures 12 to 19.

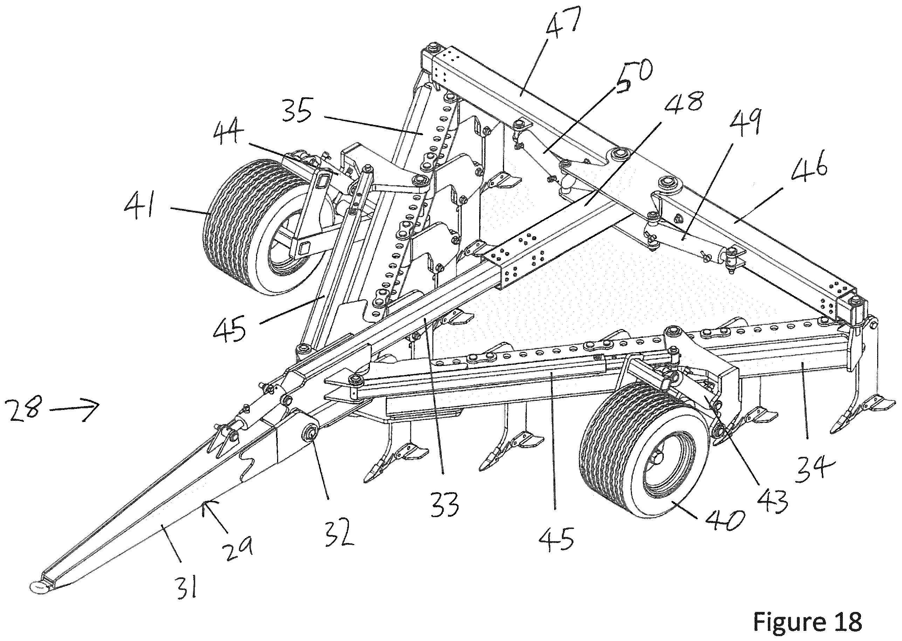

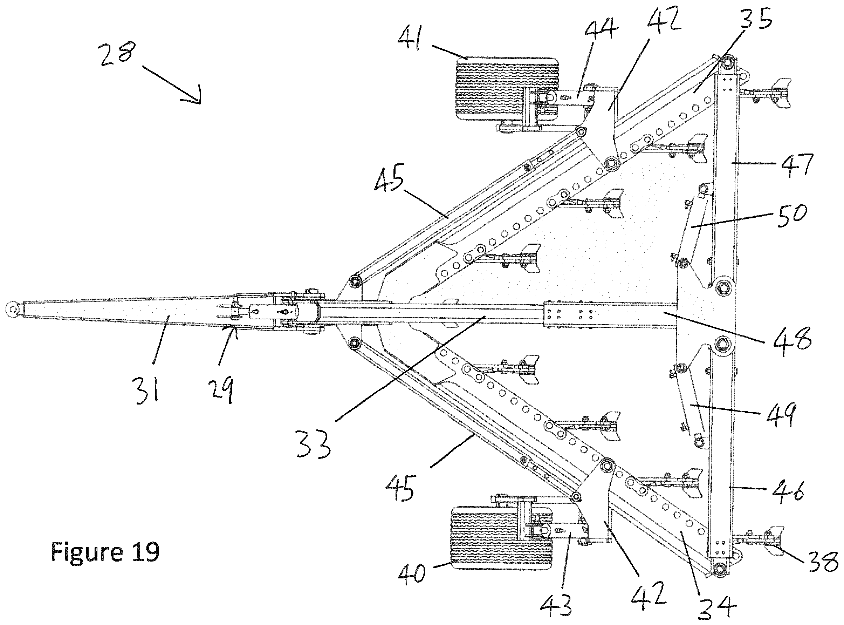

In the working configuration illustrated in Figures 12 to 17, the bracing members 46 and 47 are fully extended by their respective hydraulic rams (not shown), maximising the angle of the V between the wings 34 and 35 and thus maximising the spacing between the tines 38 in a width direction of the subsoiler 28. If it is desired to reduce the spacing between the tines 38, then the hydraulic rams within the bracing members 46 and 47 may be fully retracted, causing the bracing members 46 and 47 to contract and the drawbar extension member 48 to move rearwards on the rear portion of the drawbar 33, as the wings 34 and 35 fold inwardly to the position shown in Figures 18 and 19. In this position the tines 38 are more closely spaced in the width direction of the subsoiler 28 than they would be in the working configuration illustrated in Figures 12 to 17. Thus, retracting or extending the bracing members 46 and 47 provides a convenient way of altering the spacing between the tines 38 and therefore enables the spacing between the tines 38 to be altered to take account of varying soil conditions or the application to which the subsoiler 28 is to be applied.

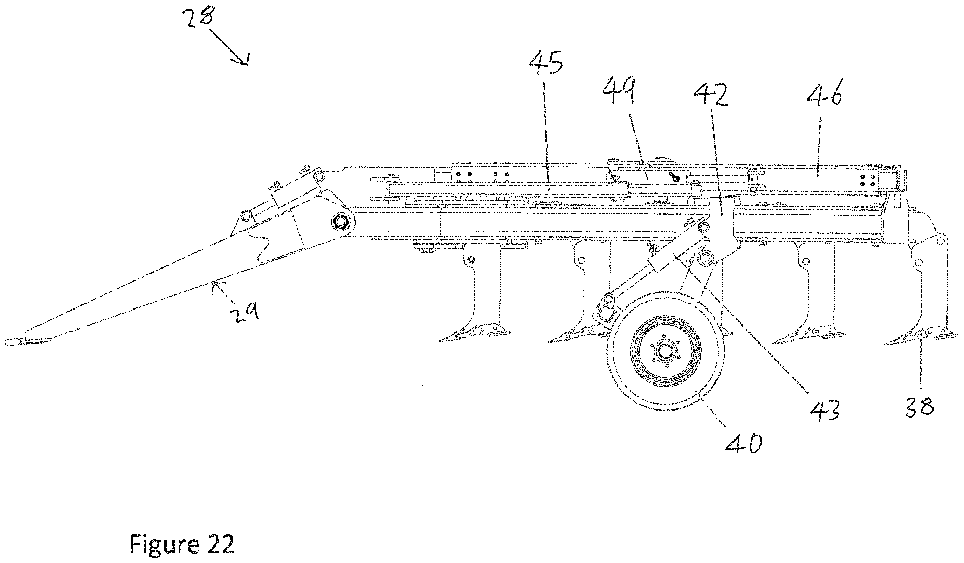

When it is desired to transport the subsoiler 28, the subsoiler 28 is folded from the working configuration shown in Figures 12 to 17, (or Figures 18 and 19), to the transport configuration illustrated in Figures 20 and 22. This is achieved by first lowering the wheels 40 and 41 to raise the tines 38 clear of the ground and then, with the bracing members 46 and 47 fully contracted to the positions shown in Figures 18 and 19, fully extending the hydraulic rams 49 and 50, forcing the drawbar extension member 48 to slide forward on the rear portion 33 of the drawbar 29, such that the subsoiler adopts the transport configuration illustrated in Figures 20 to 22.

The above procedure is reversed in order to open the subsoiler 28 from the transport configuration illustrated in Figures 20 to 22 to the working configuration illustrated in Figures 12 to 17, (or Figures 18 and 19).

Two embodiments of the present invention have been illustrated in and described with reference to the accompanying figures.

## Claims

1. An agricultural implement (1) comprising:
a drawbar (2) having a towing point (3) or linkage at a front end;
a frame having left and right hand wings (10, 11) foldable between an extended working configuration, where the wings (10, 11) extend outwardly to respective sides of the drawbar (2), and a retracted transport configuration, where the wings (10, 11) are folded in towards a longitudinal axis of the implement (1), a proximal end of each wing (10, 11) being pivotally connected to the drawbar (2) at or towards a rear end of the drawbar, so that together with the drawbar (2) the wings (10,11) define a frame of the implement;
a plurality of spaced apart tools (14) attached along each wing (10, 11); and
a bracing arrangement (21 to 25) for maintaining the wings (10, 11) in the working configuration, the bracing arrangement comprising:
a left hand bracing member (20) pivotally connected at a distal end to the left hand wing (10) at a point remote from the proximal end of the left hand wing; and
a right hand bracing member (21) pivotally connected at a distal end to the right hand wing (11) at a point remote from the proximal end of the right hand wing,
wherein the left and right hand bracing members (20, 21) are directly or indirectly, pivotally connected together at their proximal ends and are arranged in the working configuration to be held at a predetermined angle relative to each other in order to retain the wings (10, 11) in the working configuration, wherein the proximal end of each wing (10, 11) is pivotally connected to the drawbar (2) at a fixed location and in further comprising a drawbar extension member (23) connected at a front end to the drawbar (2) at or towards the rear of the drawbar and connected at a rear end to the proximal ends of the bracing members (20, 21), the extension member (23) being arranged to move between a retracted position, where the proximal ends of the bracing members (20, 21) are in a forward position retaining the wings (10, 11) in the transport configuration and an extended position where the proximal ends of the bracing member (20, 21) are in a rearward position and the bracing members act in compression to retain the wings (10, 11) in the outwardly extending working configuration.

2. An agricultural implement as claimed in claim 1 wherein each wing (10, 11) has a wheel (16, 17) attached thereto at a point remote from its proximal end (16, 17), the wheels (16, 17) being arranged to in use, in the working configuration, control the height of the respective wing and thus the penetration depth of the tools (14) mounted on the wings and, in the transport configuration, each wing being arranged to raise and support the wings (10, 11) such that in the transport configuration the tools (14) are held above the ground, the implement further comprising one or more linkages (19) arranged to retain the wheels (16, 17) in a forward facing orientation as the wings (10, 11) are folded between the working and transport configurations wherein, in the transport configuration, the wings (10, 11) are arranged to lie adjacent to and generally parallel with the drawbar (2).

3. An agricultural implement as claimed in any preceding claim wherein the plurality of tools is a plurality of tines (14).

4. An agricultural implement as claimed in any preceding claim wherein, in the transport configuration, the wheels (16, 17) extend in a width direction of the implement beyond the wings (10, 11).

5. An agricultural implement as claimed in any preceding claim where the drawbar extension member (23) comprises an actuator which is arranged to be extended or retracted to control the position of the wings (10, 11).

6. An agricultural implement as claimed in claim 5 having a single working configuration in which the drawbar extension member (23) is fully extended and the wings (10, 11) extend backwards and outwards to form a rearward facing V-shape, wherein the plurality of tools (14) are fixed in position on the wings (10, 11) and are correctly aligned with the direction of travel when the wings (10, 11) are in the working configuration.

7. An agricultural implement (28) as claimed in any one of claims 1 to 4 wherein the bracing arrangement further comprises one or more actuators (49, 50) acting between each of the bracing members (46, 47) and arranged to hold the bracing members (46, 47) in a working configuration, where the bracing members (46, 47) are aligned perpendicular to a longitudinal axis of the implement (28).

8. An agricultural implement (28) as claimed in claim 7 wherein the bracing members (46, 47) are extendable so that when the bracing members (46, 47) are aligned perpendicular to the longitudinal axis of the implement, the bracing members (46, 47) may be extended to one of several positions which determines the position of the wings (34, 35) so that the wings (34, 35) can be set to one of a number of working configurations.

9. An agricultural implement as claimed in claim 7 or 8 further comprising a central mounting to which the proximal ends of the bracing members (46, 47) are pivotally connected, wherein the central mounting has a fixed orientation to the drawbar (29) and is arranged to be moved backwards and forwards relative to the drawbar (29).

10. An agricultural implement as claimed in claim 9 wherein the one or more actuators (49, 50) act between a respective bracing member (46, 47) and the central mounting.

11. An agricultural implement as claimed in any one of claims 7 to 10 wherein the one or more actuators (49, 50) is arranged to fold the bracing members (46, 47) together from a working configuration to a transport configuration.

12. An agricultural implement as claimed in any one of claims 7 to 11 wherein the wings (34, 35) are arranged to be set in more than one working configuration and wherein, in each working configuration, the wings (34, 35) extend outwards and rearwards to form a rearward facing V-shape, but wherein the angle of the "V" between the wings (34, 35) and the spacing between the tools (38) in the width direction of the implement is different in each working configuration.

13. An agricultural implement as claimed in claim 12 wherein the tools (38) are arranged to freely rotate on their respective wings (34, 35) so that they are aligned in the desired position by the direction of travel of the implement over the ground.

14. An agricultural implement as claimed in claim 12 further comprising a mechanical linkage connected to the tools which maintains the tools (38) in a forward facing working direction irrespective of the angle between the wings (34, 35) in a working configuration.

## Patentansprüche

1. Landwirtschaftliches Anbaugerät (1), umfassend:
eine Zugstange (2) mit einem Zugpunkt (3) oder Gestänge an einem vorderen Ende;
einen Rahmen mit einem rechten und einem linken Flügel (10, 11), die zwischen einer ausgestreckten Arbeitskonfiguration, in der sich die Flügel (10,11) zu den jeweiligen Seiten der Zugstange (2) nach außen erstrecken, und einer abgeklappten Transportkonfiguration, in der die Flügel (10,11) in Richtung einer Längsachse des Anbaugeräts (1) geklappt sind, hin- und her geklappt werden können, wobei ein zur Mitte zeigendes Ende eines jeden Flügels (10, 11) an oder in Richtung eines hinteren Endes der Zugstange schwenkbar mit der Zugstange (2) verbunden ist, sodass die Flügel (10, 11) zusammen mit der Zugstange (2) einen Rahmen des Anbaugeräts definieren;
mehrere mit Zwischenraum angeordnete Werkzeuge (14), die entlang eines jeden Flügels (10, 11) angebracht sind; und eine Verstrebungsanordnung (21 bis 25), um die Flügel (10, 11) in der Arbeitskonfiguration zu halten, wobei die Verstrebungsanordnung Folgendes umfasst:
ein linkes Verstrebungselement (20), das schwenkbar an einem äußeren Ende des linken Flügels (10) an einem vom zur Mitte zeigenden Ende entfernten Punkt des linken Flügels verbunden ist; und
ein rechtes Verstrebungselement (21), das schwenkbar an einem äußeren Ende des rechten Flügels (11) an einem vom zur Mitte zeigenden Ende entfernten Punkt des rechten Flügels verbunden ist,
wobei das linke und das rechte Verstrebungselement (20, 21) direkt oder indirekt an ihren zur Mitte zeigenden Enden schwenkbar miteinander verbunden sind und in der Arbeitskonfiguration so angeordnet sind, dass sie in einem festgelegten Winkel zueinander gehalten werden, um die Flügel (10, 11) in der Arbeitskonfiguration zu halten, wobei
das zur Mitte zeigende Ende von
jedem Flügel (10, 11) an einer festen Stelle schwenkbar mit der Zugstange (2) verbunden ist und dadurch, dass es ferner ein Zugstangen-Verlängerungselement (23) umfasst, das an einem vorderen Ende an oder in Richtung des hinteren Endes der Zugstange mit der Zugstange (2) verbunden ist und an einem hinteren Ende mit den zur Mitte zeigenden Enden der Verstrebungselemente (20, 21) verbunden ist, wobei das Verlängerungselement (23) so angeordnet ist, dass es zwischen einer zurückgezogenen Position, in der sich die zur Mitte zeigenden Enden der Verstrebungselemente (20, 21) in einer vorderen Position befinden und die Flügel (10, 11) in der Transportkonfiguration halten, und einer ausgefahrenen Position bewegt werden kann, in der sich die zur Mitte zeigenden Enden der Verstrebungselemente (20, 21) in einer hinteren Position befinden und die Verstrebungselemente unter Druck dahingehend wirken, die Flügel (10, 11) in der nach außen ausgestreckten Arbeitskonfiguration zu halten.

2. Landwirtschaftliches Anbaugerät gemäß Anspruch 1, wobei an jedem Flügel (10, 11) an einem Punkt, der von seinem zur Mitte zeigenden Ende (16, 17) entfernt ist, ein Rad (16, 17) angebracht ist, wobei die Räder (16, 17) so angeordnet sind, dass sie im Betrieb in der Arbeitskonfiguration die Höhe des jeweiligen Flügels und so die Eindringtiefe der Werkzeuge (14) steuern, die an den Flügeln montiert sind, und in der Transportkonfiguration jeder Flügel so angeordnet ist, dass er die Flügel (10, 11) so anhebt und trägt, dass die Werkzeuge (14) in der Transportkonfiguration über dem Boden gehalten werden, wobei das Anbaugerät ferner ein Gestänge oder mehrere Gestänge (19) umfasst, die so angeordnet sind, dass sie die Räder (16, 17) in einer nach vorn zeigenden Richtung halten, wenn die Flügel (10, 11) zwischen der Arbeits- und der Transportkonfiguration hin- und her geklappt werden, wobei die Flügel (10, 11) in der Transportkonfiguration so angeordnet sind, dass sie neben und im Allgemeinen parallel zur Zugstange (2) liegen.

3. Landwirtschaftliches Anbaugerät gemäß einem der vorhergehenden Ansprüche, wobei die mehreren Werkzeuge mehrere Zinken (14) sind.

4. Landwirtschaftliches Anbaugerät gemäß einem der vorhergehenden Ansprüche, wobei die Räder (16, 17) sich in der Transportkonfiguration in einer Querrichtung des Anbaugeräts unter den Flügeln (10, 11) erstrecken.

5. Landwirtschaftliches Anbaugerät gemäß einem der vorhergehenden Ansprüche, wobei das Zugstangen-Verlängerungselement (23) einen Stellantrieb umfasst, der so angeordnet ist, dass er aus- oder eingefahren werden kann, um die Position der Flügel (10, 11) zu steuern.

6. Landwirtschaftliches Anbaugerät gemäß Anspruch 5 mit einer einzigen Arbeitskonfiguration, in der das Zugstangen-Verlängerungselement (23) voll ausgefahren ist und die Flügel (10, 11) sich nach hinten und außen erstrecken, um eine nach hinten gerichtete V-Form zu bilden, wobei die mehreren Werkzeuge (14) in Position an den Flügeln (10, 11) fixiert sind und richtig auf die Fahrtrichtung ausgerichtet sind, wenn die Flügel (10, 11) sich in der Arbeitskonfiguration befinden.

7. Landwirtschaftliches Anbaugerät (28) gemäß einem der Ansprüche 1 bis 4, wobei die Verstrebungsanordnung ferner einen Stellantrieb oder mehrere Stellantriebe (49, 50) umfasst, die zwischen den einzelnen Verstrebungselementen (46, 47) wirken und so angeordnet sind, dass sie die Verstrebungselemente (46, 47) in einer Arbeitskonfiguration halten, wobei die Verstrebungselemente (46, 47) im rechten Winkel zu einer Längsachse des Anbaugeräts (28) ausgerichtet sind.

8. Landwirtschaftliches Anbaugerät (28) gemäß Anspruch 7, wobei die Verstrebungselemente (46, 47) ausfahrbar sind, sodass die Verstrebungselemente (46, 47), wenn die Verstrebungselemente (46, 47) im rechten Winkel zur Längsachse des Anbaugeräts ausgerichtet sind, in eine oder mehrere Positionen ausgefahren werden können, was die Position der Flügel (34, 35) bestimmt, sodass die Flügel (34, 35) auf eine von einer Reihe von Arbeitskonfigurationen eingestellt werden können.

9. Landwirtschaftliches Anbaugerät gemäß Anspruch 7 oder 8, ferner eine mittige Halterung umfassend, mit der die zur Mitte zeigenden Enden der Verstrebungselemente (46, 47) schwenkbar verbunden sind, wobei die mittige Halterung eine fixierte Ausrichtung zur Zugstange (29) hat und so angeordnet ist, dass sie in Bezug auf die Zugstange (29) rückwärts und vorwärts bewegt werden kann.

10. Landwirtschaftliches Anbaugerät gemäß Anspruch 9, wobei der Stellantrieb oder die Stellantriebe (49, 50) zwischen jeweils einem Verstrebungselement (46, 47) und der mittigen Halterung wirken.

11. Landwirtschaftliches Anbaugerät gemäß einem der Ansprüche 7 bis 10, wobei der Stellantrieb oder die Stellantriebe (49, 50) so angeordnet sind, dass sie die Verstrebungselemente (46, 47) von einer Arbeitskonfiguration aus zu einer Transportkonfiguration zusammenklappen.

12. Landwirtschaftliches Anbaugerät gemäß einem der Ansprüche 7 bis 11, wobei die Flügel (34, 35) so angeordnet sind, dass sie auf mehr als eine Arbeitskonfiguration eingestellt werden können und wobei die Flügel (34, 35) sich in jeder Arbeitskonfiguration nach außen und hinten erstrecken, um eine nach hinten gerichtete V-Form zu bilden, wobei aber der Winkel des "V" zwischen den Flügeln (34, 35) und der Abstand zwischen den Werkzeugen (38) in der Querrichtung des Anbaugeräts in jeder Arbeitskonfiguration unterschiedlich ist.

13. Landwirtschaftliches Anbaugerät gemäß Anspruch 12, wobei die Werkzeuge (38) so angeordnet sind, dass sie sich frei an ihrem jeweiligen Flügel (34, 35) drehen können, sodass sie durch die Bewegungsrichtung des Anbaugeräts über den Boden in die gewünschte Position ausgerichtet werden.

14. Landwirtschaftliches Anbaugerät gemäß Anspruch 12, ferner ein mechanisches Gestänge umfassend, das mit den Werkzeugen verbunden ist und die Werkzeuge (38) unabhängig vom Winkel zwischen den Flügeln (34, 35) in einer Arbeitskonfiguration in einer nach vorn zeigenden Arbeitsrichtung hält.

## Revendications

1. Ustensile agricole (1) comprenant :
une barre d'attelage (2) possédant un point de remorquage (3) ou une tringlerie sur une extrémité antérieure ;
un châssis possédant des ailes côté gauche et côté droit (10, 11) repliables entre une configuration de travail déployée, les ailes (10, 11) se déployant vers l'extérieur relativement aux côté correspondants de la barre d'attelage (2), et une configuration de transport rétractée, dans laquelle les ailes (10, 11) sont repliées vers un axe longitudinal de l'ustensile (1), une extrémité proximale de chaque aile (10, 11) étant raccordée de façon pivotante à la barre d'attelage (2), à une extrémité postérieure de la barre d'attelage, ou vers celle-ci, de sorte qu'avec la barre d'attelage (2) les ailes (10, 11) définissent un châssis de l'ustensile ;
une pluralité d'outils espacés (14) fixés le long de chaque aile (10, 11) ; et
un agencement de renforcement (21 à 25) pour le maintien des ailes (10, 11) dans la configuration de travail, l'agencement de renforcement comprenant :
un élément de renforcement côté gauche (20) raccordé par pivotement à une extrémité distale de l'aile côté gauche (10), en un point éloigné de l'extrémité proximale de l'aile côté gauche ; et
un élément de renforcement côté droit (21) raccordé par pivotement à une extrémité distale de l'aile côté droit (11), en un point éloigné de l'extrémité proximale de l'aile côté droit,
les éléments de renforcement côtés gauche et droit (20, 21) étant, directement ou indirectement, raccordés ensemble par pivotement à leurs extrémités proximales, et étant agencés, dans la configuration de travail, pour être maintenus à un angle prédéterminé l'un par rapport à l'autre afin de maintenir les ailes (10, 11) dans la configuration de travail,
l'extrémité proximale de chaque aile (10, 11) étant raccordée par pivotement à la barre d'attelage (2) en un emplacement fixe, et comprenant en outre une rallonge de barre d'attelage (23) raccordée à une extrémité antérieure sur la barre d'attelage (2), à, ou vers, l'arrière de la barre d'attelage, et raccordée à une extrémité postérieure des extrémités proximales des éléments de renforcement (20, 21), la rallonge (23) étant agencée pour se déplacer entre une position rétractée, dans laquelle les extrémités proximales de l'élément de renforcement (20, 21) se trouvent dans une position antérieure maintenant les ailes (10, 11) dans la configuration de transport, et une position déployée, dans laquelle les extrémités proximales de l'élément de renforcement (20, 21) se trouvent dans une position postérieure, et les éléments de renforcement agissent par compression pour maintenir les ailes (10, 11) dans la configuration de travail se déployant vers l'extérieur.

2. Ustensile agricole selon la revendication 1, chaque aile (10, 11) étant munie d'une roue (16, 17) fixée sur celle-ci en un point éloigné de son extrémité proximale (16, 17), les roues (16, 17) étant agencées pour régler, en cours d'usage, dans la configuration de travail, la hauteur de l'aile correspondante, et, de là, la profondeur de pénétration des outils (14) montés sur les ailes, et, dans la configuration de transport, chaque aile étant agencée pour soulever et soutenir les ailes (10, 11) de sorte que dans la configuration de transport, les outils (14) sont maintenus au-dessus du sol, l'ustensile comprenant en outre une ou plusieurs tringleries (19) agencées pour maintenir les roues (16, 17) dans une orientation tournée vers l'avant, les ailes (10, 11) étant pliées entre les configurations de travail et de transport, dans lesquelles, dans la configuration de transport, les ailes (10, 11) sont agencées pour se trouver dans une position adjacente à la barre d'attelage (2), et d'une manière générale, parallèle à celle-ci.

3. Ustensile agricole selon une quelconque des revendications précédentes, la pluralité des outils étant une pluralité de dents (14).

4. Ustensile agricole selon une quelconque des revendications précédentes, dans lequel, dans la position de transport, les roues (16, 17) étant déployées dans une direction de la largeur de l'ustensile au-delà des ailes (10, 11).

5. Ustensile agricole selon une quelconque des revendications précédentes, dans lequel la rallonge (23) de la barre d'attelage comprend un actionneur agencé pour être déployé ou rétracté pour régler la position des ailes (10, 11).

6. Ustensile agricole selon la revendication 5 possédant une configuration de travail unique dans laquelle la rallonge (23) de la barre d'attelage est entièrement déployée, et les ailes (10, 11) étant déployées vers l'arrière et vers l'extérieur pour former une forme en V tournée vers l'arrière, la pluralité d'outils (14) étant fixée en place sur les ailes (10, 11) et étant alignée correctement avec la direction du déplacement lorsque les ailes (10, 11) se trouvent dans la configuration de travail.

7. Ustensile agricole (28) selon une quelconque des revendications 1 à 4, l'agencement de renforcement comprenant en outre un ou plusieurs actionneurs (49, 50) agissant entre chacun des éléments de renforcement (46, 47), et agencés pour maintenir les éléments de renforcement (46, 47) dans une configuration de travail, les éléments de renforcement (46, 47) étant alignés perpendiculairement à un axe longitudinal de l'ustensile (28).

8. Ustensile agricole (28) selon la revendication 7, les éléments de renforcement (46, 47) pouvant être déployés de sorte que lorsque les éléments de renforcement (46, 47) sont alignés perpendiculairement à l'axe longitudinal de l'ustensile, les éléments de renforcement (46, 47) peuvent être déployés dans une de plusieurs positions déterminant la position des ailes (34, 35) de sorte que les ailes (34, 35) puissent être réglées dans une d'un certain nombre de configurations de travail.

9. Ustensile agricole selon la revendication 7 ou 8, comprenant en outre une monture centrale sur laquelle les extrémités proximales des éléments de renforcement (46, 47) sont raccordés par pivotement, la monture centrale possédant une orientation fixe sur la barre d'attelage (29) et étant agencée pour être déplacée en arrière et en avant relativement à la barre d'attelage (29).

10. Ustensile agricole selon la revendication 9, l'un ou plusieurs actionneurs (49, 50) agissant entre un élément de renforcement (46, 47) correspondant et la monture centrale.

11. Ustensile agricole selon une quelconque des revendications 7 à 10, l'un ou plusieurs actionneurs (49, 50) étant agencés pour replier les éléments de renforcement (46, 47) ensemble, d'une configuration de travail à une configuration de transport.

12. Ustensile agricole selon une quelconque des revendications 7 à 11, les ailes (34, 35) étant agencées pour être réglées dans plus d'une configuration de travail, et, dans chaque configuration de travail, les ailes (34, 35) se déployant vers l'extérieur et en arrière pour former une forme en V tournée vers l'arrière, mais l'angle du « V » entre les ailes (34, 35) et l'espacement entre les outils dans la direction de l'ustensile étant différents dans chaque configuration de travail.

13. Ustensile agricole selon la revendication 12, les outils (38) étant agencés de façon à tourner librement sur leurs ailes respectives (34, 35) afin qu'ils soient alignés dans la position désirée par la direction du déplacement de l'ustensile sur le sol.

14. Ustensile agricole selon la revendication 12, comprenant en outre une tringlerie mécanique connectée aux outils, et maintenant les outils (38) dans une direction de travail tournée vers l'avant indépendamment de l'angle entre les ailes (34, 35) dans une configuration de travail.
